# EUROPEAN PATENT SPECIFICATION

(11) **EP 2 365 313 B1**
(45) Date of publication and mention of the grant of the patent: **26.08.2015**
(21) Application number: 10156420.1
(22) Date of filing: 12.03.2010
(51) Int. Cl.: G01N 15/02, G01N 21/47, G01N 21/49

(54) **Cross-correlation dynamic light scattering (DLS) method and system**
Verfahren und System zur dynamischen Kreuzkorrelations-Lichtstreuung
Procédé et système de diffusion dynamique de la lumière en corrélation croisée

(43) Date of publication of application: 14.09.2011
(73) Proprietor: LS Instruments AG, 1700 Fribourg (CH)
(72) Inventor: Block, Ian D., 1700, Fribourg (CH); Scheffold, Frank, 1723, Marly (CH)
(74) Representative: P&TS SA (AG, Ltd.)

(56) References cited:
- EP-A2- 0 359 681
- EP-A2- 1 884 762
- US-B1- 6 459 093
- US-B1- 7 087 885
- MEDEBACH MARTIN ET AL: "Dynamic light scattering in turbid nonergodic media" REVIEW OF SCIENTIFIC INSTRUMENTS, AIP, MELVILLE, NY, US LNKD- DOI:10.1063/1.2947756, vol. 79, no. 7, 18 July 2008 (2008-07-18), pages 73907-1-73907-12, XP012115508 ISSN: 0034-6748
- URBAN C ET AL: "Characterization of turbid colloidal suspensions using light scattering techniques combined with cross-correlation methods" JOURNAL OF COLLOID AND INTERFACE SCIENCE 19981101 US LNKD- DOI:10.1006/JCIS.1998.5769, vol. 207, no. 1, 1 November 1998 (1998-11-01), pages 150-158, XP002598783 ISSN: 0021-9797
- PUSEY P N: "Suppression of multiple scattering by photon cross-correlation techniques" CURRENT OPINION IN COLLOID AND INTERFACE SCIENCE 19990601 GB LNKD- DOI:10.1016/S1359-0294(99)00036-9, vol. 4, no. 3, 1 June 1999 (1999-06-01), pages 177-185, XP002598781 ISSN: 1359-0294
- ZAKHAROV P ET AL: "Multiple-scattering suppression in dynamic light scattering based on a digital camera detection scheme" APPLIED OPTICS 20060310 OPTICAL SOCIETY OF AMERICA USA, vol. 45, no. 8, 10 March 2006 (2006-03-10) , pages 1756-1764, XP001241166 DOI: DOI:10.1364/AO.45.001756

## Description

### Field of the invention

The present invention concerns a cross-correlation dynamic light scattering (DLS) method and system according to the independent claims.

### Description of related art

Dynamic light scattering (DLS) is a particle sizing technique that relies on the interaction of coherent light with the Brownian motion of particles in a small volume. When the sample is illuminated with a laser source, the scattered intensity pattern in the far field is comprised of a collection of 'speckles'. The spatial intensity distribution of speckles is dictated by the summation of the angular-dependant scattering efficiencies of the particles in the illumination/detection volume and by the phase relationship of the scattered fields determined by the relative particle positions. As the particles displace randomly in time due to Brownian motion, the intensity of the speckles fluctuate as the phase relationship between the light scattered by the particles change. A correlation function can be computed for the measured intensity fluctuations of a single speckle, where the decorrelation rate can be related to the size of the particles given a known viscosity and temperature of the solution.

The DLS technique relies on the assumption of a singly-scattering sample, meaning that each detected photon has been scattered exactly once by a particle in the sample. This leads to a requirement of dilute solutions and can be a great limitation to the general applicability of the technique. For more turbid samples, several techniques have been developed to reduce the contribution of multiple scattering. The most common of these techniques rely on the cross-correlation of two measurements performed on the same scattering volume at the same scattering vector, where this vector is determined by the wavelength, local refractive index, and scattering angle. Typically two incident laser beams are focused on the sample and the cross-correlation of intensity fluctuations gathered by two separate photon detectors is calculated. Single-scattering information is common to both measurements while multiple scattering information is uncorrelated, thereby leading to its effective suppression. However, one major drawback of this technique is that one photon detector measures the scattered light intensity at the desired scattering vector, but also receives an equal contribution at a second undesired scattering vector given by the relative geometry to the second illumination beam. Thus a four-fold reduction in the cross-correlation intercept arises from cross-talk between the two simultaneous scattering experiments executed with this technique. The intercept refers to the y-intercept of the cross-correlation function, where this value strongly influences measurement accuracy and precision due to its pivotal role in accurately fitting models to the measured data. For strongly scattering samples where only a small component of the detected light is singly-scattered, the signal-to-noise ratio of the measurement becomes unacceptably low as the magnitude of the cross-correlation intercept falls into the noise of the baseline fluctuations.

One approach to limit cross-talk between the two simultaneous scattering experiments performed in the cross-correlation setup is to provide spectral separation of the signals. This is accomplished in practice by using two lasers operating at different wavelengths and two detectors having distinct wavelength-selective filters to capture scattering information from a single laser. This technique is generally referred to as two-color DLS. While the two-color technique has proven to be effective at extracting single-scattering information from highly turbid systems, the technical challenges of obtaining and maintaining precise alignment of the illumination and detection optics, especially as the scattering vector is varied, makes implementation all but prohibitive.

US5502561 describes a new class of methods for characterizing particles along with associated apparatuses. These methods are called modulated dynamic light scattering (MDLS) methods because they utilize time and space modulations of the incident or scattered light as well as modulations caused by random Brownian motions of the particles, for example, to measure particular properties. It is used for small-angle light scattering where it is critical to separate the illumination light from the scattered light. Two laser beams modulated at different frequencies form a 'beat frequency' in the sample volume and it is this frequency which is filtered from the others for detection.

US6118532 relates to an instrument for determining the light scattered by a sample comprising a platform that can be moved about an axis of rotation; a sample holder disposed along the axis of rotation; a light source for producing a beam of coherent light that can be focused on a sample in the sample holder; and a plurality of detectors disposed and having the ability to be displaced about the axis of rotation and adapted so that each detector can be adjusted to focus on a common point along the axis of rotation by reference to the beam.

US6459093 describes a dynamic light scattering apparatus comprising at least two lasers of different wavelengths which illuminate the same volume of a fluid containing scattering or fluorescent centres. The scattered or fluoresced radiation is detected at each discrete wavelength and properties, such as the concentration of different particle sizes, of the volume are derived. The detection at multiple wavelengths allows the effects of multiple scattering to be overcome. Multiple volumes may be illuminated and detected simultaneously so as to measure the spatial variation of particle size concentration. The rotational diffusion constants of the particles may be measured from the depolarized component of scattered light.

The article *"*Suppression of multiple scattering by photon cross-correlation techniques" by P.N Pusey, published in Current Opinion in Colloid & Interface Science, 1999, volume 4, pages 177-185, compares the two-colour and three-dimensional dynamic light scattering techniques.

The article "Dynamic light scattering in turbid nonergodic medina" by M. Medebach ET AL, published in Review of Scienific Instruments, 2008, volume 79, pages 1-12, discloses a three-dimensional dynamic light scattering system where polarization filters are implemented, leading thus to an improved intercept.

### Brief summary of the invention

It is one aim of the invention to propose a method and a system maximizing the cross-correlation intercept for DLS measurements performed in a cross-correlation configuration.

It is another aim of the invention to propose a method and a system enabling a simple and practical DLS geometry capable of optimal suppression of multiple scattering.

These aims are solved by a method according to claim 1 and a system according to claim 9, wherein dependent claims deal with advantageous embodiments.

The present invention employs the use of a laser-beam shuttering scheme in a cross-correlation DLS setup where only a single beam and detector pair aligned at the desired scattering vector are activated at any given instant. The signals generated and captured by each beam-detector pair are thus temporally separated. Preferably the output of said photon detectors are correlated at time scales equal to or larger than that of a shutter modulation frequency.

The modulation frequency operates advantageously between 1 Hz and 100 MHz, and preferably within the range of 1 kHz-1 MHz. Preferably, each of the two laser beams are directed to a shutter and a digitally modulated electronic signal at the modulation frequency is used to control one shutter, while the logical inversion of this is used to control the other shutter, wherein the duty cycle of each signal is set such that the time averaged intensity of one laser beam passing through its respective shutter is within 75% of the intensity of the other, but ideally within 25% of the other.

Preferably a beam splitter splits a single laser beam into two distinct laser beams where each has a time-averaged intensity within 75% of the other, but preferably a time-averaged intensity within 25% of the other.

An electronic gating is advantageously implemented for each detector, and the phase and duty cycle of the digital detection gating signals are set such that no photons are recorded until the corresponding laser-beam illuminates the scattering cell with more than 50% of its steady-state ON value, preferably to more than 90% of its steady-state ON value.

Finally, scattered intensity versus scattering angle measurements can be corrected by a single-scattering contribution, which is determined by the ratio of the cross-correlation intercept measured in a multiply-scattering sample to the cross-correlation intercept measured in a transparent sample.

### Brief Description of the Drawings

The invention will be better understood with the aid of the description of an embodiment given by way of example and illustrated by the figures, in which:
Fig. 1 shows a first embodiment of a schematic view of modulated cross-correlation dynamic light scattering instrument;
Fig. 2 shows a second embodiment of a schematic view of modulated cross-correlation dynamic light scattering instrument; and
Fig. 3 shows a third embodiment of a schematic view of modulated cross-correlation dynamic light scattering instrument; and
Fig. 4 shows measured intensity cross-correlation functions of 0.002% w/v 100 nm diameter polystyrene in H₂0 using a standard 3D cross-correlation DLS scheme and 3D cross-correlation DLS according to the invention employing synchronized modulation of the illumination beams and detection electronics. An intensity auto-correlation function measured on the same sample and instrument is also given as a reference.
Fig. 5 shows the single-scattered intensity (corrected using the cross-correlation intercept) measured as a function of scattering angle for 0.04% w/v 500 nm diameter polystyrene in H₂0 using a standard 3D cross-correlation DLS scheme.
Fig. 6 shows the single-scattered intensity (corrected using the cross-correlation intercept) measured as a function of scattering angle for 0.04% w/v 500 nm diameter polystyrene in H₂0 using 3D cross-correlation DLS according to the invention employing synchronized modulation of the illumination beams and detection electronics.

### Detailed Description of possible embodiments of the Invention

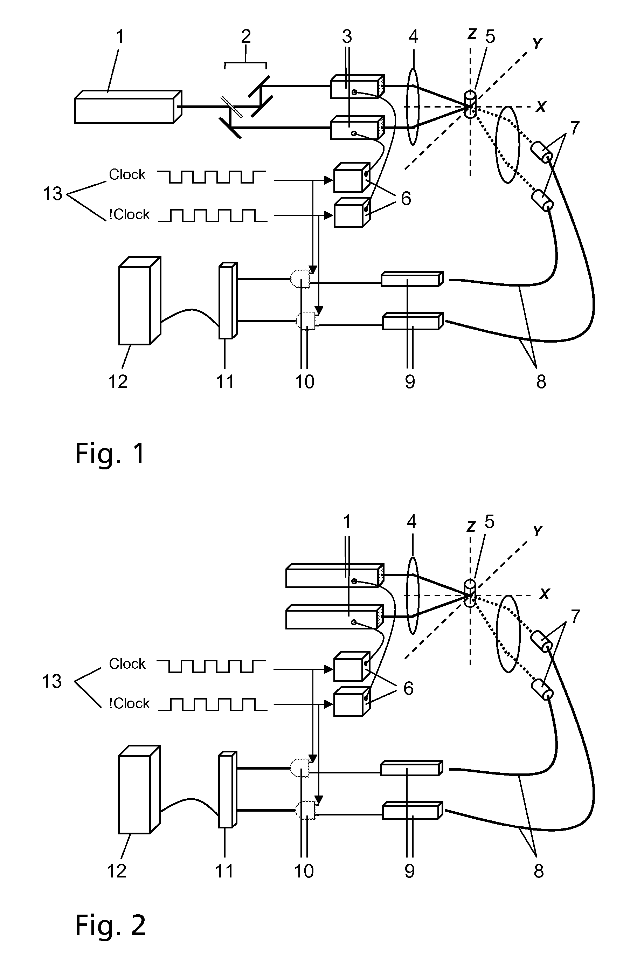

One embodiment of the modulated cross-correlation DLS instrument is diagrammed in Fig. 1. The laser 1 directs a laser beam to a beam splitter 2, which splits the laser beam into two distinct laser beams where each has a time-averaged intensity within 75% of the other, but ideally a time-averaged intensity within 25% of the other. The beams are optimally arranged in the so-called '3D geometry' where each beam is displaced symmetrically above and below the plane of the scattering cell 5 (the x-y plane as defined in Fig. 1). The photon detectors 9 are then arranged in an analogous manner and carefully aligned to ensure identical scattering vectors for each beam-detector pair. This arrangement has the advantage of simplifying alignment of the laser beams 1, especially if the scattering angle (defined as angular displacement from the positive x-axis in Fig. 1) is to be varied. In general, however, the beam-detector pairs may be aligned in any fashion so long as the geometry of each pair defines an identical scattering vector.

The present invention involves the temporal separation of two scattering experiments performed on the same scattering volume, and the cross-correlation of these measurements. The scattering experiments are performed alternately, where the modulation frequency between the two dictates the minimum timescale at which DLS information can be extracted. The dynamics of the sample therefore determine the minimum necessary timescale, and so this technique can be applicable for a very broad range of switching frequencies between 1 Hz and 100 MHz. This range is more optimally limited on the high end at 1 MHz as most multiply-scattering samples do not show extremely fast dynamics. Furthermore it is ideally limited to 1 kHz on the low end as sufficient correlation data at time scales faster than the expected decay is useful for more accurately fitting data from samples exhibiting slow dynamics.

It is necessary to use one or more devices to alternately shutter the laser beams. In general the beams will be shuttered with a shutter 3 such as a mechanical, electro-optic, or acousto-optic intensity modulator. Given the optimal frequency range of operation described above, the device(s) are ideally acousto-optic modulators (AOMs) 3 as these possess sufficient modulation bandwidth, are relatively inexpensive, require low driving voltages, and can preserve the shape, polarization, and propagation vector of the laser beam. One AOM is ideally placed in each beam path such that the 0th order (transmitted beam) propagates undisturbed through the instrument, the diffracted order of each AOM is spatially filtered with a beam block at the entrance to the scattering cell 5, and the optical alignment of the standard cross-correlation setup is preserved. In the case of the 3D geometry, said laser beams are directed by means of a lens 4 to a single scattering cell 5.

A signal must be generated to control the operation of the laser beam shutters. This signal must alternately activate each shutter 3, and ideally should provide maximum on-time (in which the laser beam passes undisturbed through the shuttering mechanism) of each shutter 3 while minimizing the overlap of the duration wherein both shutters are open (hereafter referred to as on-time overlap). On-time overlap will adversely affect the cross-correlation intercept while reduced on-times will limit the available intensity for the scattering experiment. One embodiment for achieving such an appropriate signal is the use of a digitally modulated electronic signal for one shutter 3 and the logical inversion of this for the other shutter 3, as illustrated by 'Clock' and '!Clock' in Fig. 1. The duty cycle of 'Clock' is set such that the time averaged intensity of one laser beam passing through its respective shutter is within 75% of the intensity of the other, but ideally within 25% of the other. The advantage of the signal inversion scheme presented above is the simplicity of generating the two coupled signals and of using the inherent rise and fall times of the shutters to ultimately control the on-times and on-time overlap. A more complex embodiment wherein on-times are slightly sacrificed to absolutely minimize on-time overlap can be achieved by reducing the duty cycle of each signal and timing the rising and falling edges of the two signals such that they occur sequentially rather than simultaneously. Optimally the signals described above are used to modulate the output of RF Amplifiers 6 which drive the AOMs 3.

For the 3D geometry illustrated in Fig. 1, a second lens collects the scattered light and directs it towards collimators 7 which couple the scattered light into single-mode fibers 8 which feed photon detectors 9.

In order to fully decouple the two scattering experiments, the photon detectors 9 must be gated with the modulation frequency of the laser beam shutters such that the beam-detector pairs defining identical scattering vectors are alternately activated. The two scattering experiments are thus temporally isolated, thereby yielding a cross-correlation intercept much nearer to the ideal value of one. Photon detector gating can be performed optically or electronically. In order to optically gate the photon detectors, mechanical, electro-optic, or acousto-optic modulators can be employed. Ideally, the gating is done electronically as this enables higher modulation bandwidth, sharper rise and fall times, is simpler to implement, and is far more cost effective especially at higher shuttering speeds. In one embodiment of the present invention, electronic gating is implemented by performing a logical AND operation with a single AND logic gate 9 for each beam-detector pair. The two inputs to the AND-gate 9 are the output of one photon detector 9 and the inverted digitally modulated signal applied to the shutter 3 acting on the laser beam 1 defining the appropriate beam-detector pair in the 3D geometry. The inverted signal is used because a logical ON value will shutter the laser beam 1 rather than allow it to pass. The output of the AND-gate 9 represents only the signal from the desired scattering geometry that can then be passed to the subsequent photon counting and cross-correlation stages. This gating methodology is simple and inexpensive to implement, and is effective at moderate laser beam shutter modulation frequencies up to the point where the rise and fall time of the shutters 3 and/or gating hardware exceeds 5% of the laser beam 1 on-time. To obtain cross-correlation intercepts closer to a value of one at high laser-beam shutter modulation frequencies, one can improve the rise and fall times of the laser beam shutters and photon gating hardware and/or one can adopt more sophisticated signal processing schemes. For the embodiment in which AOMs 3 are used as the laser beam shutters, the limitation is typically the rise and fall time of these devices. While the rise and fall times can often be improved, this is typically only possible with additional system complexity and even then improvements are limited due to reductions in AOM shuttering efficiency. One further embodiment to provide a simple and cost-effective solution to operation at high shuttering frequencies involves modifying the phase and duty cycle of each detection gating signal which is used to control activation of the photon detectors 9. The phase and duty cycle are set such that no photons are recorded until the corresponding laser-beam (forming a beam-detector pair at the desired scattering vector) illuminates the sample with more than 50% of its steady-state ON value, preferably to more than 90% of its steady-state ON value. This scheme has the effect of ignoring scattered photons generated while the other undesired beam is sill entering the scattering cell 5 with appreciable intensity. Furthermore, photons are also ignored until the activated (i.e. un-shuttered) beam is nearly in the steady state and is directed into said scattering cell 5 with a constant wavevector and spatial coherence. This technique is limited to the point where the rise and fall times of the shutters approach that of the laser-beam on-time.

The gated photon detectors 9 each feed unique photon counting hardware that accumulates photon statistics as a function of time for each of the two scattering experiments performed alternately. A cross-correlation of the scattered photon history is then performed on the output of these modules. Preferably the output of said photon detectors 9 are correlated at time scales equal to or larger than that of the shutter modulation frequency; doing so under-samples the scattered intensity fluctuations arising from laser beam shuttering and detector gating. A preferred embodiment uses cross-correlation implemented in hardware and integrated with the photon counting hardware 11. Hardware cross-correlation makes the acquisition of real-time cross-correlation data more robust, simple, and cost-effective. A computer 12 interfaces with the correlation hardware to display, capture, and process measured cross-correlation functions.

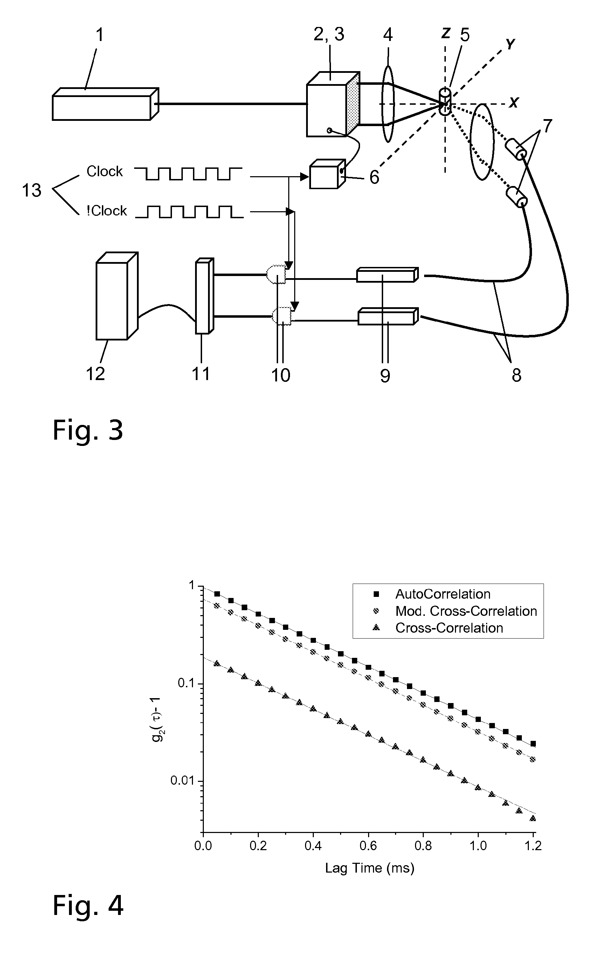

The performance of the present invention is linked to the efficiency of the optical and electronic signal suppression, as well as the response times of each of these modules. Component selection and system design have enabled robust operation up to 500 kHz. Fig. 4 shows intensity correlation functions captured from operation of the cross-correlation DLS system with and without modulation at 20 kHz, as well as operation in auto-correlation mode. The baseline intercept for the standard cross-correlation technique is measured to be 0.186, while the modulated scheme leads to an intercept of 0.734, yielding 99% of the expected 4x improvement in performance. At lower modulation frequencies, the measured gain in intercept maintains the theoretical 4x improvement, while at higher frequencies, finite rise and fall times contribute to inefficiencies causing a reduced intercept. As a reference, the autocorrelation intercept of 0.968 demonstrates an intercept very near the ideal value of one.

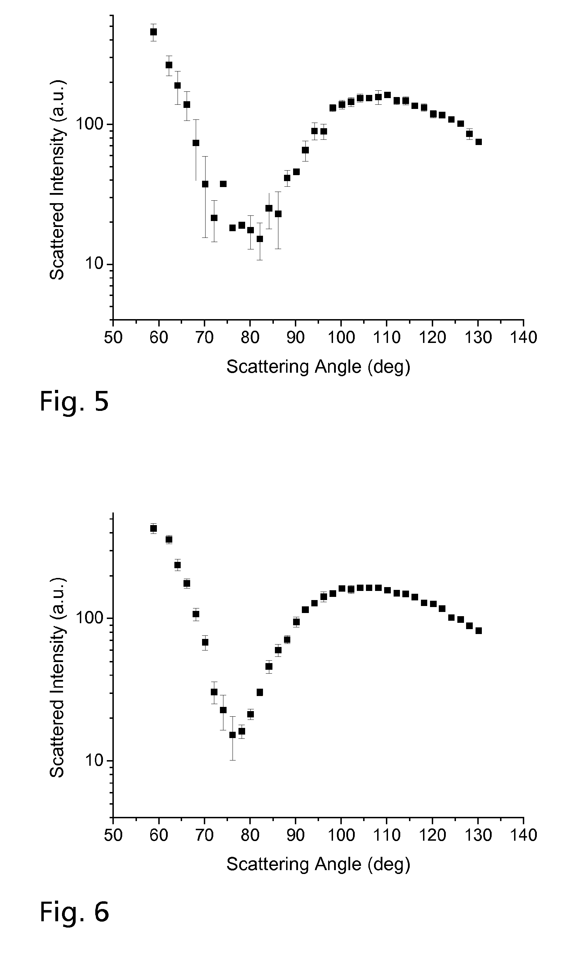

In any cross-correlation geometry, the laser 1 and/or the entrance to the single-mode fibers 8 can be concentrically mounted around said scattering cell 5 at variable angles. This important embodiment enables the measurement of angular-dependent scattering intensities, this technique being commonly referred to as static light scattering (SLS). Such measurements can lead directly to the determination of the radii of gyration and average molecular weight of particles illuminated in said scattering cell 5. It is known that SLS measurements of multiple-scattering systems can be improved by correcting the absolute scattering intensities by the amount of single scattering present as a function of scattering angle. The present invention enables a significant performance improvement of this technique by providing a more accurate measurement of the single scattering at each angle. The single scattering contribution is calculated as the ratio of the measured cross-correlation intercept to that achieved for a dilute sample with no multiple scattering. Fig. 5 shows the corrected single-scattered intensity as a function of scattering angle for 0.04% w/v 500 nm diameter polystyrene in H₂0 using a standard 3D cross-correlation DLS scheme. In comparison, Fig. 6 shows the corrected single-scattered intensity measured as a function of scattering angle for the same sample using 3D cross-correlation DLS according to the invention employing synchronized modulation of the illumination beams and detection electronics. The data illustrate the improved accuracy and precision with which SLS measurements can be performed in strongly multiply-scattering systems using the present invention. This is especially important in the form factor minimum where multiple scattering dominates and the cross-correlation intercept tends towards zero, seen in this system at approximately 77-deg using the data in Fig. 6.

Although the examples given above are described with one laser beam 1 and a beam splitter 2, it would be feasible in the framework of the present invention to use two different lasers 1 and modulate alternatively said two lasers 1 in the same way as described above. This second embodiment of the present invention is shown in Fig. 2. Such a scheme may prove more practical in terms of cost and system complexity in certain cross-correlation setups. Furthermore, it would also be feasible in the framework of the present invention to use one laser beam 1 and combine the roles of the laser beam shutters 3 and beam splitter 2 into a single optical deflector that can be actively modulated, such as an AOM. In the case of an AOM, one laser beam would be passed through the device as the 0^{th} transmitted order while the other laser beam for the second scattering experiment would be generated by activating the AOM which deflects the incident laser beam source into the 1^{st} diffracted order. While such an embodiment increases the technical complexity of optical alignment, it offers more efficient use of the available laser intensity, enables greater control over precision beam splitting, and potentially reduces component cost. This third embodiment of the present invention is illustrated in Fig. 3.

### Reference numbers

- 1: Laser
- 2: Beam-splitter
- 3: Shutter, acousto-optic modulator AOM
- 4: Focusing and collimating lenses
- 5: Scattering cell
- 6: RF Amplifier
- 7: Collimators
- 8: Fibers
- 9: Photon detector
- 10: Logic AND-gate
- 11: Correlator
- 12: Computer, PC
- 13: Digitally modulated electronic signals

## Claims

1. A cross-correlation dynamic light scattering (DLS) method for use with multiply-scattering samples comprising the steps of
• providing two laser beams (1) that are directed to a single scattering cell (5);
• detecting scattered light from each laser beam (1) passing through one scattering cell (5) by photon detectors (9), wherein the geometry of each beam-detector pair defines an identical desired scattering vector; and
• delivering the output of said photon detectors (9) to subsequent photon counting hardware (11) wherein the output is cross-correlated **characterized in that**
• the two laser beams (1) are alternately shuttered at a modulation frequency, and
• said photon detectors (9) are optically or electronically gated at the modulation frequency such that the beam-detector pairs defining the identical desired scattering vector are alternately activated.

2. The method according to claim 1, wherein the modulation frequency operates between 1 Hz and 100 MHz, preferably within the range of 1 kHz-1 MHz.

3. The method according to claims 1 or 2, wherein each of the two laser beams (1) are directed to a shutter (3), and a digitally modulated electronic signal (13) at the modulation frequency is used to control one of the shutters (3), while a logical inversion of this is used to control the other of the shutters (3), wherein a duty cycle of each signal is set such that a time averaged intensity of one of the laser beams passing through its respective shutter (3) is within 75% of the intensity of the other, preferably within 25% of the other.

4. The method according to any of the claims 1 to 3, wherein a beam splitter (2) splits a single laser beam into the two laser beams (1), where one of the laser beams has a time-averaged intensity within 75% of the other, preferably a time-averaged intensity within 25% of the other.

5. The method according to any of the claims 1 to 4, wherein electronic gating is implemented for each photon detector (9).

6. The method according to claim 5, wherein a phase and a duty cycle of the digital detection gating signals are set such that no photons are recorded until the corresponding laser beam illuminates the scattering cell (5) with more than 50% of its steady-state ON value, preferably to more than 90% of its steady-state ON value.

7. The method according to any of the claims 1 to 6, wherein the output of said photon detectors (9) are correlated at time scales equal to or larger than that of the modulation frequency.

8. The method according to any of the claims 1 to 7, wherein an angular-dependent scattered intensity measured for a multiply-scattering system is corrected by the angular-dependent single-scattering contribution, which is determined by a ratio of a cross-correlation intercept measured in a multiply-scattering sample to the cross-correlation intercept measured in a transparent sample.

9. A system for cross-correlation dynamic light scattering (DLS) measurements of multiple-scattering samples comprising
• one scattering cell (5);
• at least one laser (1) for directing two laser beams to said scattering cell (5);
• two photon detectors (9), one for each laser beam (1) passing said scattering cell (5), wherein the beam-detector pairs are aligned such that the geometry of each beam-detector pair defines an identical desired scattering vector, and
• a subsequent photon counting hardware (11) and cross-correlation software or hardware
**characterized by**
• at least one shutter (3) for alternately shuttering the two laser beams (1) at a modulation frequency, wherein said photon detectors (9) are gated at the modulation frequency.

10. The system according to claim 9, wherein the at least one shutter (3) comprises laser-beam shutters (3) such as an acousto-optic modulator (AOM), which operate at the modulation frequency between 1 Hz and 100 MHz, preferably within the range of 1 kHz-1 MHz.

11. The system according to claim 9 or 10, wherein the at least one shutter (3) comprises a single acousto-optic modulator (AOM) that is configured to provide a function of both beam splitting and intensity modulation.

12. The system according to any of the claims 9 to 11, comprising one or more RF amplifiers (6) which is/are provided to drive the at least one shutter (3).

13. The system according to any of the claims 9 to 12, wherein said cross-correlation hardware or software (11, 12) is configured to correlate an output of said photon counting hardware (11) at time scales equal to or larger than that of the modulation frequency.

14. The system according to any of the claims 9 to 13, wherein each laser beam is displaced symmetrically above and below the plane of the scattering cell (5) and the photon detectors (9) are aligned to ensure identical scattering vectors for each beam-detector pair.

15. The system according to any of the claims 9 to 14, wherein said laser (1) and/or entrances to fibers (8) feeding the photon detectors (9) are concentrically mounted around said scattering cell (5) at variable angles.

## Patentansprüche

1. Ein Verfahren basierend auf der kreuzkorrelierten dynamischen Lichtstreuung (DLS) zur Benutzung mit Vielstreuproben aufweisend die Schritte:
Bereitstellen von zwei Laserstrahlen (1), die auf eine einzelne Streuzelle (5) gerichtet sind;
Erfassen des gestreuten Lichts von jedem Laserstrahl (1), der durch die einzelne Streuzelle (5) gegangen ist, durch Photonendetektoren (9), wobei die Geometrie der Strahl-Detektor Paare so ausgerichtet ist, dass jedes Strahl-Detektor Paar einen identischen gewünschten Streuvektor definiert; und
Liefern der Ausgabe der Photonendetektoren (9) an eine nachfolgende Photonenzählhardware (11), wobei die Ausgabe kreuzkorreliert ist;
**dadurch gekennzeichnet, dass**
die zwei Laserstrahlen (1) abwechselnd mit einer Modulationsfrequenz geshuttert werden, und
die Photonendetektoren (9) optisch oder elektronisch mit der Modulationsfrequenz gegated werden, so dass die Strahl-Detektor Paare, die den identischen gewünschten Streuvektor definieren, abwechselnd aktiviert werden.

2. Das Verfahren nach Anspruch 1, wobei die Modulationsfrequenz zwischen 1 Hz und 100 MHz, vorzugsweise innerhalb des Bereichs von 1 kHz bis 1 MHz, betrieben wird.

3. Das Verfahren nach Anspruch 1 oder 2, wobei jeder der zwei Laserstrahlen (1) auf einen Shutter (3) gerichtet ist, und ein digital moduliertes elektrisches Signal (13) mit der Modulationsfrequenz verwendet wird, um einen der Shutter (3) zu steuern, während eine logische Invertierung dieses zur Steuerung des anderen der Shutter (3) verwendet wird, wobei ein Betriebszyklus jedes Signals so eingestellt wird, dass eine zeitlich gemittelte Intensität eines der zwei durch den entsprechenden Shutter (3) gehenden Laserstrahlen innerhalb 75% der Intensität des anderen, vorzugsweise innerhalb 25% des anderen, ist.

4. Das Verfahren nach einem der Ansprüche 1 bis 3, wobei ein Strahlteiler (2) einen einzelnen Laserstrahl (1) in die zwei Laserstrahlen aufteilt, wobei einer der zwei Laserstrahlen (1) eine zeitlich gemittelte Intensität innerhalb 75% der Intensität des anderen, vorzugsweise innerhalb 25% des anderen hat.

5. Das Verfahren nach einem der Ansprüche 1 bis 4, wobei das elektronische Gaten für jeden der Photonendetektoren (9) implementiert ist.

6. Das Verfahren nach Anspruch 5, wobei eine Phase und ein Betriebszyklus digitaler Detektionsgatesignale so eingestellt sind, dass kein Photon aufgenommen wird bis der entsprechende Laserstrahl die Streuzelle (5) mit mehr als 50 % seines beständigen An-Zustandswerts, vorzugsweise mit mehr als 90 % seines beständigen An-Zustandswerts, beleuchtet.

7. Das Verfahren nach einem der Ansprüche 1 bis 6, wobei die Ausgabe der Photonendetektoren (9) über Zeitskalen gleich oder größer als die der Modulationsfrequenz kreuzkorreliert werden.

8. Das Verfahren nach einem der Ansprüche 1 bis 7, wobei eine für Vielstreusysteme gemessene winkelabhängige Streuintensität durch einen winkelabhängigen Einzelstreubeitrag korrigiert wird, der durch ein Verhältnis eines in einer Vielstreuprobe gemessenen Kreuzkorrelationswerts zu einem in einer transparenten Probe gemessenen Kreuzkorrelationswert bestimmt wird.

9. Ein System für kreuzkorrelierten dynamischen Lichtstreuung von Vielstreuproben aufweisend:
Eine Streuzelle (5);
mindestens einem Laser (1) zum Ausrichten von zwei Laserstrahlen auf die Streuzelle (5);
zwei Photonendetektoren (9), einen für jeden durch die Streuzelle (5) gehenden Laserstrahl (1), wobei die Strahl-Detektor Paare so ausgerichtet sind, dass die Geometrie jedes Strahl-Detektor Paars einen identischen gewünschten Streuvektor definiert; und
eine nachfolgende Photonenzählhardware (11) und eine Kreuzkorrelationssoftware oder -hardware;
**gekennzeichnet durch**
mindestens einen Shutter (3) zum abwechselnden Shuttern der zwei Laserstrahlen (1) mit einer Modulationsfrequenz, wobei die Photonendetektoren (9) abwechselnd mit der Modulationsfrequenz gegated werden.

10. Das System nach Anspruch 9, wobei der mindestens eine Shutter (3) Laserstrahlshutter (3) aufweist, z.B. akustisch-optische Modulatoren (AOM), die mit der Modulationsfrequenz zwischen 1 Hz und 100 MHz, vorzugsweise innerhalb des Bereichs von 1 kHz bis 1 MHz, betrieben werden.

11. Das System nach Anspruch 9 oder 10, wobei der mindestens eine Shutter (3) einen einzelnen akustisch-optischen Modulator (AOM) aufweist, der ausgebildet ist, eine Funktion von sowohl Strahlteilung und Intensitätsmodulation bereitzustellen.

12. Das System nach Anspruch einem der Ansprüche 9 bis 11, aufweisend einen oder mehrere RF Verstärker (6), der/die bereitgestellt ist/sind, um den mindestens eine Shutter (3) anzusteuern.

13. Das System nach einem der Ansprüche 9 bis 12, wobei die Kreuzkorrelationshardware oder -software (11, 12) ausgebildet ist, eine Ausgabe der Photonenzählhardware (11) über Zeitbereiche gleich oder grösser als die der Modulationsfrequenz zu korrelieren.

14. Das System nach einem der Ansprüche 9 bis 13, wobei jeder Laserstrahl symmetrisch über und unter der Ebene der Streuzelle (5) angeordnet ist, und die Photonendetektoren (9) ausgerichtet sind, um identische Streuvektoren für jedes Strahl-Detektor-Paar zu sichern.

15. Das System nach einem der Ansprüche 9 bis 14, wobei die Laser (1) und/oder Eingänge zu Glasfasern (8), die die Photonendetektoren (8) versorgen, konzentrisch um die Streuzelle (5) unter verschiedenen Winkeln angeordnet sind.

## Revendications

1. Procédé de diffusion dynamique de la lumière en corrélation croisée pour l'utilisation avec des échantillons à diffusion multiple comprenant les étapes suivantes:
• fournir deux faisceaux laser (1) dirigés vers une seule cellule de diffusion (5) ;
• détection de la lumière diffusée de chaque faisceau laser (1) passant à travers une cellule de diffusion (5) par des détecteurs de photons (9), dans lequel la géométrie de chaque paire de détecteur de faisceau défini un vecteur de diffusion identique souhaité; et
• fournir la sortie desdits détecteurs de photon (9) portillonnés au hardware de comptage de photon subséquent (11), dans lequel la sortie est en corrélation croisée,
**caractérisée en ce que**
• les deux faisceaux laser (1) sont alternativement bloqués à une modulation de fréquence, et
• lesdits détecteurs de photons (9) sont optiquement ou électroniquement portillonnés à la modulation de fréquence de telle sorte que les paires de détecteurs de faisceaux définissant le vecteur de diffusion identique souhaité sont alternativement activés.

2. Procédé selon la revendication 1, dans lequel la modulation de fréquence fonctionne entre 1 Hz et 100 MHz, de préférence dans la gamme de 1 kHz-1 MHz.

3. Procédé selon l'une des revendications 1 à 2, dans lequel chacun des deux faisceaux laser (1) est dirigé vers un portillon (3), un signal électronique modulé numériquement (13) à la fréquence de modulation étant utilisé pour contrôler un des portillons (3), tandis que ce ce signal inversé logiquement est utilisée pour contrôler l'autre des portillons (3), dans lequel le rapport cyclique de chaque signal est réglé de telle sorte que la moyenne temporelle de l'intensité d'un faisceau laser passant à travers son portillon respectif (3) est moins de 75% de l'intensité de l'autre, préférablement moins de 25% de l'autre .

4. Procédé selon l'une quelconque des revendications 1 à 3, dans lequel un diviseur de faisceau (2) divise un faisceau laser unique en les deux faisceaux laser (1), où un des faisceaux a une moyenne temporelle d'intensité de moins de 75% de l'autre, de préférence une moyenne temporelle d'intensité de moins de 25% de l'autre.

5. Procédé selon l'une quelconque des revendications 1 à 4, dans lequel un portillonnage électronique est mis en oeuvre pour chaque détecteur (9).

6. Procédé selon l'une quelconque des revendications 1 à 5, dans lequel une phase et un rapport cyclique des signaux numériques de détection de portillonnage étant fixés de telle sorte qu'aucun photon n'est enregistré jusqu'à ce que le faisceau laser correspondant illumine la cellule de diffusion (5) avec plus de 50% de la valeur de son état d'équilibre ON, de préférence à plus de 90% de la valeur de son état d'équilibre ON.

7. Procédé selon l'une des revendications 1 à 6, dans lequel la sortie desdits détecteurs de photons (9) est corrélée à des échelles de temps égales ou plus grandes que celle d'une fréquence de modulation.

8. Procédé selon l'une des revendications 1 à 7, dans lequel une intensité de diffusion dépendante de l'angle et mesurée pour un système de diffusion multiple est corrigée par la contribution dépendante de l'angle de la diffusion simple, qui est déterminé par un rapport d'une valeur de corrélation croisée mesurée dans un échantillon de diffusion multiple à la valeur de la corrélation croisée mesurée dans un échantillon transparent.

9. Un système pour les mesures de diffusion de lumière dynamique à corrélation croisée d'échantillons de diffusion multiple comprenant :
• une cellule de diffusion (5) ;
• au moins un laser (1) pour diriger deux faisceaux lasers vers ladite cellule de diffusion (5) ;
• deux détecteurs de photons (9), un pour chaque faisceau laser (1) passant ladite cellule de diffusion (5), dans lequel les paires de détecteurs de faisceau sont alignées de sorte que la géométrie de chaque paire de détecteur de faisceau définisse un vecteur de diffusion identique souhaité, et
• un hardware de comptage de photon subséquent (11) et un hardware ou software de corrélation croisée
**caractérisé par**
• au moins un portillon (3) pour alternativement fermer les deux faisceaux laser (1) à une fréquence de modulation, dans lequel lesdits détecteurs de photon (9) sont portillonnés à la fréquence de modulation.

10. Système selon la revendication 9, dans lequel au moins un portillonneur de faisceaux lasers (3), comprend un modulateur acousto-optique (AOM), qui fonctionnent à la fréquence de modulation comprise entre 1 Hz et 100 MHz, de préférence dans la gamme de 1 kHz à 1 MHz.

11. Système selon la revendication 9 ou 10, dans lequel au moins un portillon (3) comprend un seul modulateur acousto-optique (AOM) configuré pour fournir à la fois une fonction de division de faisceaux et de modulation d'intensité.

12. Système selon l'une des revendications 9 à 11, comprenant un ou plusieurs amplificateurs RF (6) qui est/sont prévus pour commander au moins un portillon.

13. Système selon l'une des revendications 9 à 12, dans lequel ledit le hardware ou software de corrélation croisée (11, 12) est configuré pour corréler une sortie dudit hardware de comptage de photons (11) à des échelles de temps égales à ou plus grandes que celles de la modulation de fréquence.

14. Système selon l'une des revendications 9 à 13, dans lequel chaque faisceau laser est déplacé symétriquement au-dessus et en dessous du plan de la cellule de diffusion (5) et les détecteurs de photon (9) sont alignés pour assurer des vecteurs de diffusion identiques pour chaque paire de détecteur de faisceau.

15. Système selon l'une des revendications 9 à 14, dans lequel ledit laser (1) et / ou les entrées dans les fibres (8) alimentant les détecteurs de photons (9) sont montés concentriquement autour de ladite cellule de diffusion (5) à des angles variables.
